# EUROPÄISCHE PATENTSCHRIFT

(11) **EP 0 818 517 B1**
(45) Veröffentlichungstag und Bekanntmachung des Hinweises auf die Patenterteilung: **01.10.2003**
(21) Anmeldenummer: 97111698.3
(22) Anmeldetag: 10.07.1997
(51) Int. Cl.: C09D 11/00

(54) **Tintensatz und Tinten auf wässriger Basis sowie deren Verwendung**
Ink set and aqueous inks as well as their use
Assortiment d'encres et encres aqueuses ainsi que leur utilisation

(30) Priorität: 12.07.1996 DE 19628209
(43) Veröffentlichungstag der Anmeldung: 14.01.1998
(73) Patentinhaber: J.S. STAEDTLER GmbH & Co, D-90427 Nürnberg (DE)
(72) Erfinder: Engel, Stefan, Dr., 90491 Nürnberg (DE)

(56) Entgegenhaltungen:
- EP-A- 0 588 241
- US-A- 5 118 350

## Beschreibung

Die Erfindung betrifft Tintensätze und Tinten auf wässriger Basis sowie deren Verwendung zum Schreiben, Zeichnen, Malen, Drucken, insbesondere auch für Ink-Jet- oder sonstige maschinelle Schreib-, Druck-, Mal- oder Markier-Verfahren, wobei die Tinten vorzugsweise auf beschichtete Medien aufgetragen werden.

Derartige Tintensätze bzw. Tinten, z.B. auch für Tintenstrahldrucker, sind prinzipiell bekannt.
So beschreibt das europäische Patent nach **EP-PS 526 731 B1** einen Tintenstrahl-Tintensatz mit roter (Magenta), blauer (Cyan) und gelber Tinte, zur Verwendung in Tintenstrahldruckern.
Hierbei sollen einem Träger, der aus 5 bis 11 % Glykolen und/oder Glykolethern und Wasser besteht, 1,75 bis 4 % Farbstoffe zugesetzt werden, die aus den Gruppen: "Reactive Red 180", "Acid Red 52", "Acid Yellow 23" und/oder "Acid Blue 9" auszuwählen sind.
Nachteilig hierbei ist insbesondere, daß diese Tinten bzw. deren Abstriche weder in ihren Einzelfarben noch in den Mischfarben hohe Lichtechtheit und einheitliche bzw. gleiche Verblassungsraten aufweisen.

Aus **EP PS 0 345 763 B1** sind Aufzeichnungslösungen bekannt, die vor allem brillante, licht- und wasserbeständige Abstriche ergeben sollen. Deren Aufzeichnungsmittel, die insbesondere zur Herstellung magentafarbener oder blauer Tinte dienen sollen, weisen grundsätzlich mindestens zwei unterschiedliche Farbstoffe auf. Jeweils einer dieser Farbstoffe ist hierbei nach speziellen Vorgaben gebildet oder zusammengesetzt und jeweils mindestens ein anderer Farbstoff ist (nach C.I. = Colour Index) ein Farbstoff, der aus der Gruppe: "Acid Red 131", "Acid Red 274", Direct Red 227, Direct Red 9, Direct Yellow 86, Direct Yellow 142, Direct Blue 199, Direct Blue 86 und/oder Acid Blue 198 auszuwählen ist. Die vorgeschlagenen Farbstoffe sollen hierbei in einem flüssigen Medium gelöst oder dispergiert sein, wobei das Lösungsmittel einen mehrwertigen oder einen aliphatischen einwertigen Alkohol umfassen soll.
Nachteilig bei diesen Aufzeichnungslösungen ist, daß jeweils einer der in den Tinten enthaltenen Farbstoffe kein übliches Handelsprodukt ist und daher nicht ohne weiteres erhältlich ist. Zudem sind hier stets mehrere Farbstoffe in Mischung erforderlich, so daß die Tinten einerseits nicht unbedingt immer herstellbar und zum anderen auch sehr teuer sind. Außerdem ist nicht ersichtlich, wie die einzelnen Tinten eines gesamten Tintensatzes aus mindestens drei verschiedenen Tintenfarben erstellt werden sollen oder können und ob und wie dann auch bei Mischfarben insbesondere gute Lichtechtheit und relativ einheitliche Farbkonstanz gewährleistet werden kann.

Weiter ist aus der **EP-OS 0 588 241** ein Tintenset für Tintenstahlaufzeichnungsverfahren mit verminderter Ausblutungsneigung auf unbeschichteten Aufzeichnungsmedien bekannt, wobei beim Druckvorgang immer zwingend ein kationscher und ein anionischer Farbstoff zum Einsatz kommen und damit ein Vermischen an den Farbgrenzen zu vermeiden. Nachteilig bei einem derartigen Tintenset ist es, daß Mischfarben durch das vorhandensein, sowohl kationischer als auch anionischer Farbstoffe nur eingeschränkt oder nicht hergestellt werden können und zudem ist das Tintenset nicht oder nur eingeschränkt für beschichtete Aufzeichnungsmedien geeignet.

Darüber hinaus sind **auf dem Markt Pigmenttinten** bekannt, die eine relativ hohe Lichtechtheit aufweisen, die aber einerseits sich leicht absetzen und keine hohe Lagerstabilität aufweisen und die andererseits feinste Kapillaren und Düsen der Speicher und/oder der Schreibdochte oder der Ink-Jet-Köpfe leicht verstopfen können. Derartige Pigmenttinten gelten bisher als die lichtechten Tinten schlechthin und es erschien praktisch nicht oder nur äußerst schwer möglich, vergleichbar gute Werte auch mit Farbstofftinten zu erzielen.

**Aufgabe** der Erfindung ist es deshalb, Tintensätze und Tinten auf wässriger Basis mit wasserlöslichen Farbstoffen zu schaffen, die die genannten Nachteile nicht aufweisen und die daher jederzeit und relativ einfach und preiswert herstellbar sind, die bei hoher Lagerstabilität feine Düsen oder Kapillaren nicht verstopfen und die in den drei Grundfarben blau bzw. cyan, rot
bzw. magenta und gelb und ggf. zusätzlich auch in schwarz leicht hergestellt werden können und deren Abstriche sowohl direkt, als auch in den daraus zu bildenden Mischfarben, hohe Lichtechtheit bei annähernd gleicher Verblassungsrate aufweisen.

Darüber hinaus sollen derartige Tinten, bzw. deren Abstriche, gegebenenfalls auch auf beschichteten Schreib- und Druckmedien, die vorzugsweise im Freien zu verwenden sind, auch wasser- und wetterfest sein.

Diese Aufgabe wird mit den Merkmalen des Anspruchs 1 und 18 gelöst.

Bevorzugte Ausführungsformen und vorteilhafte Weiterbildungen sind in den Ansprüchen 2 bis 17 umfaßt.

Nachfolgend wird die Erfindung anhand einiger Tinten-Beispiele erläutert.

### Beispiel 1 (Rahmenbeispiel):

| | |
|---|---|
| 70 bis 95 Gew.-% | Wasser (W), als Lösungsmittel (LM), |
| 0,5 bis 20 Gew.-% | Glycerin (G), Trocknungsverzögerer (TV), |
| 1 bis 25 Gew.-% | Farbstoff(FS), als Farbmittel (FM), |
| 0,1 bis 1 Gew.-% | Konservierungsstoff (KM), |
| 0,1 bis 5 Gew.- % | sonstige Zusätze und ggf. |
| 0 bis 2 Gew.-% | Triethanolamin (TEA), als pH-Einstellmittel. |

### Beispiel 2 (blaue Tinte/Cyan) (T1):

| | |
|---|---|
| 5 Gew.-% | Glycerin (G), |
| 3 Gew.-% | Direct Blue 199 als Farbstoff (FS1), |
| 0,7 Gew.-% | Triethanolamin (TEA), |
| 0,2 Gew.-% | Konservierungsstoff (KM), |
| Rest = Wasser (W) | |

### Beispiel 3 (rote Tinte/Magenta) (T2):

| | |
|---|---|
| 5 Gew.-% | Glycerin (G) |
| 2 Gew.-% | Reactive Red 23 als Farbstoff (FS2), |
| 1,5 Gew.-% | Triethanolamin (TEA), |
| 0,2 Gew.-% | Konservierungsstoff (KM), |
| Rest = Wasser (W). | |

### Beispiel 4 (gelbe Tinte) (T3):

| | |
|---|---|
| 5 Gew.-% | Glycerin (G), |
| 5 Gew.-% | Reactive Yellow 37 als Farbstoff (FS3), |
| 0,7 Gew.-% | Triethanolamin (TEA), |
| 0,2 Gew.-% | Konservierungsstoff (KM), |
| Rest = Wasser (W). | |

### Beispiel 5 (schwarze Tinte) (T4):

| | |
|---|---|
| 5 Gew.-% | Glycerin (G) |
| 20 Gew.-% | Solubilised Sulfur Black 1 als Farbstoff (FS4), |
| 0,2 Gew.-% | Konservierungsstoff (KM), |
| Rest = Wasser (W) als Lösungsmittel (LM). | |

### Beispiel 6: Tintensatz (TS1):

Ein Tintensatz (TS1), bestehend aus blauer (cyan), roter (magenta) und gelber Tinte, weist jeweils eine Tinte der vorherigen Beispiele 2, 3, und 4 auf.

### Beispiel 7: Tintensatz (TS2):

Ein Tintensatz (TS2), bestehend aus blauer (cyan), roter (magenta), gelber und schwarzer Tinte, weist jeweils eine Tinte der vorherigen Beispiele 2, 3, 4 und 5 auf.
Die auf wässriger Basis aufgebauten Tinten eignen sich zum Schreiben, Zeichnen, Malen, Drucken, insbesondere auch für Ink-Jet- oder sonstige Druck- oder Markier-Verfahren.

Ein vorschlagsgemäßer Tintensatz TS, bestehend grundsätzlich aus mehreren Tinten T1, T2, T3, T... verschiedener Tintenfarben weist mindestens eine rote bzw. magentafarbene, eine blaue bzw. cyanfarbene und eine gelbe Tinte auf. Zusätzlich kann er auch eine schwarze Tinte enthalten. Derartige Tintensätze TS sollen insbesondere zur Verwendung in Tintenstrahldruckern und -Plottern vorgesehen sein. Jede Tinte T1, T2, T3, T... soll mindestens einen löslichen Farbstoff FS, als wesentliches Farbmittel FM, und Lösungsmittel LM, sowie einen oder auch mehrere Trocknungsverzögerer TV und ggf. auch Konservierungsmittel KM und/oder weitere Zusätze Z1, Z2, Z3, Z4, Z... aufweisen. Nach der Erfindung soll das Lösungsmittel LM im wesentlichen Wasser W sein, die Tinten T1, T2, T3, T... mindestens einen wasserlöslichen Farbstoff FS1, FS2, FS3, FS4 als jeweils wesentliches und vorzugsweise als alleiniges Farbmittel (FM) enthalten, wobei das wesentliche Farbmittel FM bzw. der hauptsächliche Farbstoff FS eine Lichtechtheit von größer oder gleich 5, vorzugsweise von 6 oder 7, gegen die blaue Wollskala aufweist,
wobei es sich hier um eine Bestimmungsmethode der Lichtechtheit mit Hilfe eines Lichtechtheitsmaßstabes von 1 (gering) bis 8 (hervorragend) handelt, wie er z.B. auch in DIN 54 004 (Ausgabe August 1983) Seite 1 und 2 beschrieben und dargestellt ist. Zur Prüfung wird hierbei Xenonbogenlicht verwendet.
Nach einem weiteren Gedanken der Erfindung soll ein erster Tintensatz TS1 eine erste Tinte T1 mit "Direct Blue 199" als FS1, eine zweite Tinte T2 mit "Reactive Red 23" als FS2 und eine dritte Tinte T3 mit "Reactive Yellow 37" als FS3, jeweils als ausschließlichen oder als überwiegenden hauptsächlichen Farbstoff FS aufweisen.
Ein zweiter Tintensatz TS2 soll eine erste Tinte T1 mit "Direct Blue 199" als FS1, eine zweite Tinte T2 mit "Reactive Red 23" als FS2, eine dritte Tinte T3 mit "Reactive Yellow 37" als FS3 und eine vierte Tinte T4 mit "Solubilised Sulfur Black 1" als FS4, jeweils als ausschließlichen oder als überwiegenden hauptsächlichen Farbstoff FS aufweisen.

Insbesondere zur Abstimmung der Trocknungsgeschwindigkeit des Abstriches und der Eintrocknungsgefahr im Schreib- oder Druckgerät kann dem Tintensatz TS, bzw. jeder Tinte T1, T2, T3, T4, T... Glycerin G als (ggf. wesentlicher) Trocknungsverzögerer TV und eventuell auch Triethanolamin als pH-Wert-Einsteller und/oder sonstige Zusätze Z2, Z3, Z4, Z... zugesetzt werden, vorzugsweise in einer Menge von 0,5 bis 20 Gew.-%.
Bei der Verwendung in Ink-Jet-Systemen oder in ähnlichen Geräten, wie z.B. Plottern, ist es von besonderem Vorteil, wenn das Farbmittel FM im wesentlichen salzfrei ist. Dies gilt dann natürlich auch für alle anderen Komponenten der Tinten.
Zur einfachen Herstellung ist es günstig, wenn das Farbmittel FM vor der Verarbeitung bereits als Flüssigfarbstoff vorliegt, der vorzugsweise einen Farbstoffgehalt
von 2 bis 50 % aufweist;, wobei die Trägersubstanz hierbei - je nach Farbstoffart - Wasser und/oder ein alkoholisches bzw. sonstiges organisches Lösungsmittel sein kann.

Jeder Tintensatz TS bzw. jede Tinte T2, T3, T4, T... kann vorteilhaft auch als weiteren Zusatzstoff ZS Triethanolamin TEA enthalten, ebenso wie ggf. als sonstigen Zusatz Z3, Z4, Z4 Tenside T, Konservierungsmittel KM und/oder Antikorrosionsmittel AKM.
Als Tensid T kann bevorzugt ein Fettalkoholpolyglycoläther enthalten sein und als Konservierungsmittel KM eine Lösung von Isothiazolinon-Derivaten, wie beispielsweise 5-Chlor-2-methyl-3-(2h)-isothiazolon, 2-Methyl-3-(2h)-isothiazolon, 12-Hydroxy-5,8,11-trioxadodecan, 1,3-Bis-(hydroxymethyl)-harnstoff und 1,6-Dihydroxy-2,5-dioxahexan.
Alternativ können hierfür aber auch Lösungen von O- und N-Acetalen, von halogenierten Säureamid-Derivaten und/oder N,Sheterocyclischen Verbindungen verwendet werden.
Von Vorteil ist es ggf. auch, wenn der Tintensatz TS bzw. die jeweilige Tinte T1, T2, T3, T4, T...Emulgatoren E, Tenside T, Konservierungsmittel KM und ggf. weitere Zusätze ZS in einer Menge von insgesamt 0,5 - 5 Gew.-% enthält.

In bevorzugten Mischungen soll ein Tintensatz TS bzw. dessen einzelne Tinte T1, T2, T3, T4, T... jeweils 1 bis 25 Gew.-% Farbstoff FS1, FS2, FS3, FS4, FS... als Farbmittel (FM), 70 bis 95 Gew.-% Wasser W als Lösungsmittel LM, 0,5 bis 20 Gew.% Glycerin G als Trocknungverzögerer TV und 0,1 bis 5 Gew.-% sonstige Zusätze Z2, Z3, Z4, Z... enthalten.

Demgemäß weist in einem ersten Tintensatz TS1 eine erste Tinte T1 3 Gew.-% Farbstoff FS1 als Farbmittel F, 5 Gew.-% Glycerin G als Trocknungverzögerer, 0,2 Gew.-% Konservierungsmittel KM, 0,7 Gew.-% Triethanolamin (Z2) und den Rest = Wasser W, als Lösungsmittel LM auf, wobei der Farbstoff FS1 "Direct Blue 199" ist.
Eine zweite Tinte T2 setzt sich zusammen aus: 2 Gew.-% Farbstoff FS2 als Farbmittel FM, 5 Gew.-% Glycerin G als Trocknungverzögerer, 0,2 Gew.-% Konservierungsmittel KM, 1,5 Gew.-% Triethanolamin (Z2) und dem Rest = Wasser W, als Lösungsmittel LM, wobei der Farbstoff FS2 "Reaktive Red 23" ist.

Eine dritte Tinte T3 enthält 5 Gew.-% Farbstoff FS3 als Farbmittel FM, 5 Gew.-% Glycerin G als Trocknungverzögerer, 0,2 Gew.-% Konservierungsmittel KM, 0,7 Gew.-% Triethanolamin TEA und den Rest = Wasser W, als Lösungsmittel LM, wobei der Farbstoff FS3 "Reactive Yellow 37" ist.

Sofern der Tintensatz TS noch eine vierte Tinte T4 aufweist, besteht diese nach einer bevorzugten Ausführung aus 20 Gew.-% Farbstoff FS4 als Farbmittel FM, 5 Gew.-% Glycerin G als Trocknungverzögerer TV, 0,2 Gew.-% Konservierungsmittel KM und dem Rest = Wasser W, als hauptsächliches Lösungsmittel LM, wobei der Farbstoff FS4 insbesondere "Solubilised Sulfur Black 1" ist.
Als besonders vorteilhaft hat sich die Verwendung eines vorgeschlagenen Tintensatzes TS, TS1, TS2 der aus mehreren Tinten T1, T2, T3, T4, T... besteht und/oder mindestens einer Tinte T1, T... wie beschrieben und beansprucht, in einem Ink-Jet-Druck- oder -Plotter-Verfahren, vorzugsweise auf beschichteten Druckmedien, insbesondere auf beschichtetem Papier, Textilgewebe, Folie, Faservlies oder ähnlichem, wobei eine mineralische Beschichtung wie Kieselsäure und/oder eine im basichen pH-Bereich wasserlösliche Kunstharz- oder Schellack-Beschichtung bevorzugt vorliegen sollte.

Die vorschlagsgemäßen Tinten zeichnen sich insbesondere durch die hohe Lichtechtheit ihrer Abstriche, durch den problemlosen Gebrauch und die einfache Herstellung, sowie durch ihre lange Lagerstabilität unter allen Bedingungen, aus. Zudem ist sie bei Gelb und Magenta überraschenderweise lichtechter, als Pigment-Systeme. Ein weiterer Vorteil ist darin zu sehen, daß alle Farben gleich stark verblassen, das heißt, einen annähernd gleichen Verblassungsgrad aufweisen. Mit den vorgeschlagenen Tintensätzen TS, die mindestens die Tinten T1, T2 und T3 mit den unterschiedlichen Farben, rot (Magenta), blau (Cyan) und gelb enthalten, lassen sich, insbesondere in Tintenstrahldruckern oder -Plottern, alle anderen wesentlichen Farben als Mischfarben erzeugen. Schwarz ist hierbei vorteilhaft als eigene Tinte T4 vorzusehen, kann aber ggf. auch als Mischfarbe hergestellt werden.
Zum "Schönen" oder zur Erzielung anderer Effekte, können auch andere systemverträgliche Farbstoffe zugegeben werden.

## Patentansprüche

1. Tintensatz (TS), bestehend aus mehreren Tinten (T1, T2, T3, T...) verschiedener Tintenfarben, der mindestens eine rote bzw. magentafarbene, eine blaue bzw. cyanfarbene und eine gelbe enthält, zur Verwendung in Tintenstrahldruckern, wobei jede Tinte mindestens einen löslichen Farbstoff (FS) als wesentliches Farbmittel (FM) und Lösungsmittel (LM) sowie einen oder mehrere Trocknungsverzögerer (TV) und Konservierungsmittel (KM) und/oder weitere Zusätze (Z1, Z2, Z3, Z4, Z...) aufweist,
**dadurch gekennzeichnet,**
**daß** das Lösungsmittel (LM) im wesentlichen Wasser (W) ist,
**daß** jede Tinte (T1, T2, T3, T...) mindestens ein Tensid als weiteren Zusatz (Z1) enthält,
**daß** die Tinten (T1, T2, T3, T...) mindestens einen wasserlöslichen Farbstoff (FS1, FS2, FS3, FS4) als jeweils wesentliches Farbmittel (FM) enthalten,
**daß** das jeweils wesentliche Farbmittel (FM) bzw. der hauptsächliche Farbstoff (FS) eine Lichtechtheit von größer oder gleich 5, gegen die blaue Wollskala aufweist
**und daß** der Tintensatz (TS1)
eine erste Tinte (T1) "Direct Blue 199" (FS1),
eine zweite Tinte (T2) "Reactive Red 23" (FS2) und
eine dritte Tinte (T3) "Reactive Yellow 37" (FS3),
jeweils als ausschließlichen oder als überwiegenden hauptsächlichen Farbstoff (FS) enthält.

2. Tintensatz nach Anspruch 1,
**dadurch gekennzeichnet,**
**daß** der Tintensatz (TS2)
eine erste Tinte (T1) mit "Direct Blue 199" (FS1),
eine zweite Tinte (T2) mit "Reactive Red 23" (FS2),
eine dritte Tinte (T3) mit "Reactive Yellow 37" (FS3) und
eine vierte Tinte (T4) mit "Solubilised Sulfur Black 1" (FS4), jeweils als ausschließlichen oder als überwiegenden hauptsächlichen Farbstoff (FS) aufweist.

3. Tintensatz nach Anspruch 1 oder 2,
**dadurch gekennzeichnet,**
**daß** jede Tinte (T1, T2, T3, T...) Glycerin (G) als Trocknungsverzögerer (TV) und ggf. Triethanolamin und/oder sonstige Zusätze (Z2, Z3, Z4, Z...) enthält.

4. Tintensatz nach einem der vorhergehenden Ansprüche,
**dadurch gekennzeichnet,**
**daß** jede Tinte (T1, T2, T3, T...) 0,5 bis 20 Gew.-% Glycerin (G) enthält.

5. Tintensatz nach einem der vorhergehenden Ansprüche,
**dadurch gekennzeichnet,**
**daß** das Farbmittel (FM) im wesentlichen salzfrei ist.

6. Tintensatz nach einem der vorhergehenden Ansprüche,
**dadurch gekennzeichnet,**
**daß** das Farbmittel (FM) vor der Verarbeitung als Flüssigfarbstoff mit einem Farbstoffgehalt von 2 bis 50 % vorliegt, wobei die Trägersubstanz hierbei Wasser und/oder Alkohol und/oder ein anderes organisches Lösungsmittel ist.

7. Tintensatz nach einem der vorhergehenden Ansprüche,
**dadurch gekennzeichnet ,**
**daß** die Tinten (T2, T3, T4, T...) als weiteren Zusatzstoff (ZS) Triethanolamin (TEA) enthalten.

8. Tintensatz nach einem der vorhergehenden Ansprüche,
**dadurch gekennzeichnet ,**
**daß** die Tinten (T1, T2, T3, T4, T...)
als weitere Zusatzstoffe (ZS)
bzw. als sonstigen Zusatz (Z3, Z4, Z4)
Tenside (T), Konservierungsmittel (KM) und/oder Antikorrosionsmittel (AKM) enthalten.

9. Tintensatz nach einem der vorhergehenden Ansprüche,
**dadurch gekennzeichnet ,**
**daß** die Tinten (T1, T2, T3, T4, T...)
als sonstigen Zusatz (Z3, Z4, Z4)
bzw. als Tensid (T), Fettalkoholpolyglykoläther enthalten.

10. Tintensatz nach einem der vorhergehenden Ansprüche,
**dadurch gekennzeichnet,**
**daß** das Konservierungsmittel (KM)
eine Lösung von Isothiazolinon-Derivaten ist.

11. Tintensatz nach einem der Ansprüche 1 bis 8,
**dadurch gekennzeichnet,**
**daß** das Konservierungsmittel (KM)
eine Lösung von O- und N-Acetalen,
halogenierten Säureamid-Derivaten
und/oder N-, S-heterocyclischen Verbindungen ist.

12. Tintensatz nach einem der vorhergehenden Ansprüche,
**dadurch gekennzeichnet,**
**daß** die Tinten (T1, T2, T3, T4, T...) als weitere Zusätze (Z1 - Zn) 0,5 - 5 Gew.-% Emulgatoren (E), Tenside (T) und/oder Konservierungsmittel (KM) enthalten.

13. Tintensatz nach einem der vorhergehenden Ansprüche,
**dadurch gekennzeichnet ,**
**daß** die Tinten (T1, T2, T3, T4, T...) jeweils
| | |
|---|---|
| 1 bis 25 Gew.-% | Farbstoff (FS1, FS2, FS3, FS4, FS...) als Farbmittel (FM), |
| 70 bis 95 Gew.-% | Wasser (W) als Lösungsmittel (LM), |
| 0,5 bis 20 Gew.-% | Glycerin (G) als Trocknungverzögerer (TV) und |
| 0,1 bis 5 Gew.-% | Tensid und ggf. weitere Zusätze (Z2, Z3, Z4, Z...) |
enthalten.

14. Tintensatz nach einem der vorhergehenden Ansprüche,
**dadurch gekennzeichnet ,**
**daß** eine erste Tinte (T1)
3 Gew.-% Farbstoff (FS1) als Farbmittel (F),
5 Gew.-% Glycerin (G) als Trocknungverzögerer,
0,2 Gew.-% Konservierungsmittel (KM),
0,7 Gew.-% Triethanolamin (Z2) und den
Rest = Wasser (W), als Lösungsmittel (LM), enthält,
wobei der Farbstoff (FS1) insbesondere ein "Direct Blue 199" - Farbstoff ist.

15. Tintensatz nach einem der vorhergehenden Ansprüche,
**dadurch gekennzeichnet ,**
**daß** eine zweite Tinte (T2)
2 Gew.-% Farbstoff (FS2) als Farbmittel (FM),
5 Gew.-% Glycerin (G) als Trocknungverzögerer,
0,2 Gew.-% Konservierungsmittel (KM),
1,5 Gew.-% Triethanolamin (Z2) und den
Rest = Wasser (W), als Lösungsmittel (LM), enthält,
wobei der Farbstoff (FS2) insbesondere ein "Reactive Red 23" - Farbstoff ist.

16. Tintensatz nach einem der vorhergehenden Ansprüche,
**dadurch gekennzeichnet ,**
**daß** eine dritte Tinte (T3)
5 Gew.-% Farbstoff (FS3) als Farbmittel (FM),
5 Gew.-% Glycerin (G) als Trocknungverzögerer,
0,2 Gew.-% Konservierungsmittel (KM),
0,7 Gew.-% Triethanolamin (Z2) und den
Rest = Wasser (W), als Lösungsmittel (LM), enthält,
wobei der Farbstoff (FS3) insbesondere ein "Reactive Yellow 37" - Farbstoff ist.

17. Tintensatz nach einem der vorhergehenden Ansprüche,
**dadurch gekennzeichnet ,**
**daß** eine vierte Tinte (T4)
20 Gew.-% Farbstoff (FS4) als Farbmittel (FM),
5 Gew.-% Glycerin (G) als Trocknungverzögerer(TV),
0,2 Gew.-% Konservierungsmittel (KM) und den
Rest = Wasser (W), als hauptsächliches
Lösungsmittel (LM), enthält, wobei der Farbstoff (FS4) insbesondere ein "Solubilised Sulfur Black 1" - Farbstoff ist.

18. **Verwendung** eines Tintensatzes (TS, TS1, TS2, TS3, TS..) aus mehreren Tinten (T1, T2, T3, T...)
und/oder mindestens einer Tinte (T1, T...)
nach einem der vorhergehenden Ansprüche
in einem Ink-Jet-Druckverfahren,
vorzugsweise auf beschichtetem Druckmedium,
insbesondere auf beschichtetem Papier, Textilgewebe, Folie, Faservlies oder ähnlichem,
wobei eine mineralische Beschichtung wie Kieselsäure und/oder eine im basischen pH-Bereich wasserlösliche Kunstharz oder Schellack-Beschichtung
vorliegt.

## Claims

1. Ink set (TS) consisting of several inks (T1, T2, T3, T ...) of different ink colours, which comprises at least red or magenta tint, a blue or cyanine tint and a yellow, for use in ink jet printers, wherein each ink comprises at least one soluble dyestuff (FS) as essential colorant (FM) and solvent (LM) as well as one or more drying retarders (TV) and preservatives (KM) and/or further additives (Z1, Z2, Z3, Z4, Z ...), **characterised in that** the solvent (LM) is substantially water (W), that each ink (T1, T2, T3, T ...) contains at least one surfactant as further additive (Z1), that the inks (T1, T2, T3, T ...) contain at least one waters-soluble dyestuff (FS1, FS2, FS3, FS4) as respective essential colorant (FM), that the respective essential colorant (GM) or the principal dyestuff (FS) has a fade-resistance greater than or equal to 5 relative to the blue wool scale and that the ink set (TS1) contains a first ink (T1) "Direct Blue 199" (FS1), a second ink (T2) "Reactive Red 23" (FS2) and a third ink (T3) "Reactive Yellow 37" (FS3) each as exclusive or as predominating main dyestuff (FS).

2. Ink set according to claim 1, **characterised in that** the ink set (TS2) comprises a first ink (T1) with "Direct Blue 199" (FS1), a second ink (T2) with "Reactive Red 23" (FS2), a third ink (T3) with "Reactive Yellow 37" (FS3) and a fourth ink (T4) with "Solubilised Sulfur Black 1" (FS4) each as exclusive or as predominating main dyestuff (FS).

3. Ink set according to claim 1 or 2, **characterised in that** each ink (T1, T2, T3, T ...) contains glycerol (G) as drying retarder (TV) and optionally triethanolamine and/or other additives (Z2, Z3, Z4, Z ...).

4. Ink set according to any one of the preceding claims, **characterised in that** each ink (T1, T2, T3, T ...) contains 0.5 to 20 weight % of glycerol (G).

5. Ink set according to any one of the preceding claims, **characterised in that** the colorant (FM) is substantially salt-free.

6. Ink set according to any one of the preceding claims, **characterised in that** the colorant (FM) prior to preparation is present as a liquid dyestuff with a dyestuff content of 2 to 50%, wherein the carrier substance **in that** case is water and/or alcohol and/or another organic solvent.

7. Ink set according to any one of the preceding claims, **characterised in that** the inks (T2, T3, T4, T ...) contain triethanolamine (TEA) as further addition agent (ZS).

8. Ink set according to any one of the preceding claims, **characterised in that** the inks (T1, T2, T3, T4, T ...) contain surfactants (T), preservatives (KM) and/or anticorrosion agents (AKM) as further addition agents (Z5) or as other additive (Z2, Z3, Z4).

9. Ink set according to any one of the preceding claims, **characterised in that** the inks (T1, T2, T3, T4, T ...) contain fatty alcohol polyglycolether as other additive (Z2, Z3, Z4) or as surfactant (T).

10. Ink set according to any one of the preceding claims, **characterised in that** the preservative (KM) is a solution of isothiazolinon derivatives.

11. Ink set according to any one of claims 1 to 8, **characterised in that** the preservative (KM) is a solution of O and N acetates, halogenated acid amide derivatives and/or N-, S-heterocyclic compounds.

12. Ink set according to any one of the preceding claims, **characterised in that** the inks (T1, T2, T3, T4, T ...) contain 0.5 to 5 weight % of emulsifiers (E), surfactants (T) and/or preservatives (KM) as further additives (Z1 to Zn).

13. Ink set according to any one of the preceding claims, **characterised in that** the inks (T1, T2, T3, T4, T ...) contain
| | |
|---|---|
| 1 to 25 weight % | dyestuff (FS1, FS2, FS3, FS4, FS ...) as colorant (FM), |
| 70 to 95 weight % | water (W) as solvent (LM), |
| 0.5 to 20 weight % | glycerol (G) as drying retarder (TV) and |
| 0.1 to 5 weight % | surfactant and optionally further additives (Z2, Z3, Z4, Z ...). |

14. Ink set according to any one of the preceding claims, **characterised in that** a first ink (T1) contains
| | |
|---|---|
| 3 weight % | dyestuff (FS1) as colorant (F), |
| 5 weight % | glycerol (G) as drying retarder, |
| 0.2 weight % | preservative (KM), |
| 0.7 weight % | triethanolamine (Z2) and |
| the remainder = water (W), as solvent (LM), wherein the dyestuff (FS1) is, in particular, a "Direct Blue 199" dyestuff. | |

15. Ink set according to any one of the preceding claims, **characterised in that** a second ink (T2) contains
| | |
|---|---|
| 2 weight % | dyestuff (FS2) as colorant (FM), |
| 5 weight % | glycerol (G) as drying retarder, |
| 0.2 weight % | preservative (KM), |
| 1.5 weight % | triethanolamine (Z2) and |
| the remainder = water (W), as solvent (LM), wherein the dyestuff (FS2) is, in particular, a "Reactive Red 23" dyestuff. | |

16. Ink set according to any one of the preceding claims, **characterised in that** a third ink (T3) contains
| | |
|---|---|
| 5 weight % | dyestuff (FS3) as colorant (FM), |
| 5 weight % | glycerol (G) as drying retarder, |
| 0.2 weight % | preservative (KM), |
| 0.7 weight % | triethanolamine (Z2) and |
| the remainder = water (W), as solvent (LM), wherein the dyestuff (FS3) is, in particular, a "Reactive Yellow 37" dyestuff. | |

17. Ink set according to any one of the preceding claims, **characterised in that** a fourth ink (T4) contains
| | |
|---|---|
| 20 weight % | dyestuff (FS4) as colorant (FM), |
| 5 weight % | glycerol (G) as drying retarder (TV), |
| 0.2 weight % | preservative (KM), and |
| the remainder = water (W), as principal solvent (LM), wherein the dyestuff (FS4) is, in particular, a "Solubilised Sulfur Black 1" dyestuff. | |

18. Use of an ink set (TS, TS1, TS2, TS3, TS ...) consisting of several inks (T1, T2, T3, T ...) and/or at least one ink (T1, T ...) according to one of the preceding claims in an ink jet printing process, preferably on a coated printing medium, particularly on coated paper, textile fabric, film, non-woven fibre material or similar, wherein a mineral coating such as silicic acid and/or a synthetic resin or shellac coating soluble in the basic pH range is present.

## Revendications

1. Assortiment d'encres (TS), composé de plusieurs encres (T1, T2, T3, T...) de différentes teintes, qui contient au moins une couleur rouge ou magenta, une couleur bleue ou cyan, et une couleur jaune, destiné à être utilisé dans des imprimantes à jet d'encre, où chaque encre présente au moins un colorant soluble (FS) en tant que matière colorante essentielle (FM) et un solvant (LM), ainsi qu'un ou plusieurs retardateurs de séchage (TV) et conservateurs (KM) et/ou d'autres additifs (Z1, Z2, Z3, Z4, Z...), **caractérisé**
**en ce que** le solvant (LM) est essentiellement de l'eau (W),
**en ce que** chaque encre (T1, T2, T3, T...) contient au moins un tensioactif en tant qu'autre additif (Z1),
**en ce que** les encres (T1, T2, T3, T...) contiennent au moins un colorant hydrosoluble (FS1, FS2, FS3, FS4) en tant que matière colorante essentielle respective (FM),
**en ce que** la matière colorante essentielle respective (FM) ou le colorant principal (FS) présente une tenue à la lumière supérieure ou égale à 5, sur l'échelle des laines bleues,
et **en ce que** l'assortiment d'encres (TS1) contient
une première encre (T1) "Direct Blue 199" (FS1),
une seconde encre (T2) "Reactive Red 23" (FS2), et
une troisième encre (T3) "Reactive Yellow 37" (FS3), respectivement en tant que colorant (FS) exclusif ou principal prépondérant.

2. Assortiment d'encres selon la revendication 1, **caractérisé en ce que**
l'assortiment d'encres (TS2) présente
une première encre (T1) avec "Direct Blue 199" (FS1),
une seconde encre (T2) avec "Reactive Red 23" (FS2),
une troisième encre (T3) avec "Reactive Yellow 37" (FS3), et
une quatrième encre (T4) avec "Solubilised Sulfur Black 1" (FS4), respectivement en tant que colorant (FS) exclusif ou principal prépondérant.

3. Assortiment d'encres selon la revendication 1 ou 2, **caractérisé en ce que** chaque encre (T1, T2, T3, T...) contient de la glycérine (G) en tant que retardateur de séchage (TV) et éventuellement de la triéthanolamine et/ou d'autres additifs (Z2, Z3, Z4, Z...).

4. Assortiment d'encres selon l'une des revendications précédentes, **caractérisé en ce que** chaque encre (T1, T2, T3, T...) contient 0,5 à 20 % en masse de glycérine (G).

5. Assortiment d'encres selon l'une des revendications précédentes, **caractérisé en ce que** la matière colorante (FM) est essentiellement exempte de sel.

6. Assortiment d'encres selon l'une des revendications précédentes, **caractérisé en ce que** la matière colorante (FM), avant traitement en tant que colorant liquide, se présente avec une teneur en colorant comprise entre 2 et 50 %, la substance de support étant à cet égard de l'eau et/ou de l'alcool et/ou un autre solvant organique.

7. Assortiment d'encres selon l'une des revendications précédentes, **caractérisé en ce que** les encres (T2, T3, T4, T...) contiennent en tant qu'autre additif (ZS) de la triéthanolamine (TEA).

8. Assortiment d'encres selon l'une des revendications précédentes, **caractérisé en ce que** les encres (T1, T2, T3, T4, T...) contiennent en tant qu'additifs supplémentaires (ZS) ou en tant qu'autre additif (Z3, Z4, Z4) des tensioactifs (T), des conservateurs (KM) et/ou des agents anticorrosion (AKM).

9. Assortiment d'encres selon l'une des revendications précédentes, **caractérisé en ce que** les encres (T1, T2, T3, T4, T...) contiennent en tant qu'autre additif (Z3, Z4, Z4) ou en tant que tensioactif (T) du polyglycoléther d'alcool gras.

10. Assortiment d'encres selon l'une des revendications précédentes, **caractérisé en ce que** le conservateur (KM) est une solution de dérivés d'isothiazolinone.

11. Assortiment d'encres selon l'une des revendications 1 à 8, **caractérisé en ce que** le conservateur (KM) est une solution de O- et de N-acétals, de dérivés d'amides acides halogénés et/ou de composés N- ou S-hétérocycliques.

12. Assortiment d'encres selon l'une des revendications précédentes, **caractérisé en ce que** les encres (T1, T2, T3, T4, T...) contiennent en tant qu'additifs supplémentaires (Z1 - Zn) 0,5 à 5 % en masse d'émulsifiants (E), de tensioactifs (T) et/ou de conservateurs (KM).

13. Assortiment d'encres selon l'une des revendications précédentes, **caractérisé en ce que** les encres (T1, T2, T3, T4, T...) contiennent respectivement
| | |
|---|---|
| 1 à 25 % en masse | de colorant (FS1, FS2, FS3, FS4, FS...) en tant que matière colorante (FM), |
| 70 à 95 % en masse | d'eau (W) en tant que solvant (LM), |
| 0,5 à 20 % en masse | de glycérine (G) en tant que retardateur de séchage, et |
| 0,1 à 5 % en masse | de tensioactif et éventuellement d'autres additifs (Z2, Z3, Z4, Z...). |

14. Assortiment d'encres selon l'une des revendications précédentes, **caractérisé en ce que** la première encre (T1) contient
3 % en masse de colorant (FS1) en tant que matière colorante (F),
5 % en masse de glycérine (G) en tant que retardateur de séchage,
0,2 % en masse de conservateur (KM),
0,7 % en masse de triéthanolamine (Z2) et le
reste d'eau (W), en tant que solvant (LM),
le colorant (FS1) étant en particulier un colorant "Direct Blue 199".

15. Assortiment d'encres selon l'une des revendications précédentes, **caractérisé en ce qu'**une seconde encre (T2) contient
2 % en masse de colorant (FS2) en tant que matière colorante (FM),
5 % en masse de glycérine (G) en tant que retardateur de séchage,
0,2 % en masse de conservateur (KM),
1,5 % en masse de triéthanolamine (Z2) et le
reste d'eau (W), en tant que solvant (LM),
le colorant (FS2) étant en particulier un colorant "Reactive Red 23".

16. Assortiment d'encres selon l'une des revendications précédentes, **caractérisé en ce qu'**une troisième encre (T3) contient
5 % en masse de colorant (FS3) en tant que matière colorante (FM),
5 % en masse de glycérine (G) en tant que retardateur de séchage,
0,2 % en masse de conservateur (KM),
0,7 % en masse de triéthanolamine (Z2) et le
reste d'eau (W), en tant que solvant (LM),
le colorant (FS3) étant en particulier un colorant "Reactive Yellow 37".

17. Assortiment d'encres selon l'une des revendications précédentes, **caractérisé en ce qu'**une quatrième encre (T4) contient
20 % en masse de colorant (FS4) en tant que matière colorante (FM),
5 % en masse de glycérine (G) en tant que retardateur de séchage,
0,2 % en masse de conservateur (KM), et le
reste d'eau (W), en tant que solvant essentiel (LM),
le colorant (FS4) étant en particulier un colorant "Solubilised Sulfur Black 1".

18. Utilisation d'un assortiment d'encres (TS, TS1, TS2, TS3, TS...) composé de plusieurs encres (T1, T2, T3, T...) et/ou d'au moins une encre (T1, T...) selon l'une des revendications précédentes dans un procédé d'impression jet d'encre, de préférence sur un support d'impression enduit, en particulier du papier enduit, un tissu textile, une feuille, un non tissé ou similaire, où il existe un enduit minéral comme de l'acide silicique et/ou un enduit d'une résine synthétique hydrosoluble dans une gamme de pH basique, ou de gomme-laque.
